(19) Europäisches Patentamt
European Patent Office
Office européen des brevets

(11) **EP 2 483 152 B1**

(12) **EUROPÄISCHE PATENTSCHRIFT**

(45) Veröffentlichungstag und Bekanntmachung des Hinweises auf die Patenterteilung:
**04.11.2015 Patentblatt 2015/45**

(21) Anmeldenummer: **10759872.4**

(22) Anmeldetag: **24.09.2010**

(51) Int Cl.:
*B64D 13/00* (2006.01)     *B64D 13/04* (2006.01)

(86) Internationale Anmeldenummer:
**PCT/EP2010/064158**

(87) Internationale Veröffentlichungsnummer:
**WO 2011/036255 (31.03.2011 Gazette 2011/13)**

(54) **REGELSYSTEM FÜR DEN KABINENDRUCK EINES FLUGZEUGS UND VERFAHREN ZUM REGELN DES KABINENDRUCKS EINES FLUGZEUGS**

REGULATING SYSTEM FOR THE CABIN PRESSURE OF AN AIRPLANE AND METHOD FOR REGULATING THE CABIN PRESSURE OF AN AIRPLANE

SYSTÈME DE RÉGULATION DE PRESSION DE LA CABINE D'UN AVION ET PROCÉDÉ PERMETTANT DE RÉGULER LA PRESSION DANS LA CABINE D'UN AVION

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **28.09.2009 DE 102009043323**
**28.09.2009 US 246257 P**

(43) Veröffentlichungstag der Anmeldung:
**08.08.2012 Patentblatt 2012/32**

(73) Patentinhaber: **Airbus Operations GmbH**
**21129 Hamburg (DE)**

(72) Erfinder:
• **PETRAC, Markus**
**21717 Deinste (DE)**
• **AKIN, Ugur**
**22762 Hamburg (DE)**

(74) Vertreter: **Maiwald Patentanwalts GmbH**
**Elisenhof**
**Elisenstrasse 3**
**80335 München (DE)**

(56) Entgegenhaltungen:
GB-A- 1 247 624     US-A- 5 186 681
US-A1- 2004 102 150     US-A1- 2007 102 576

**Beschreibung**

BEZUG AUF ZUGEHÖRIGE ANMELDUNGEN

Die vorliegende Anmeldung beansprucht die Priorität der US Provisional Patentanmeldung Nr. 61/246,257, eingereicht am 28. September 2009, und der deutschen Patentanmeldung Nr. 10 2009 043 323.6, eingereicht am 28. September 2009, deren Inhalte hierin durch Referenz inkorporiert werden.

TECHNISCHES GEBIET

Die Erfindung betrifft ein Kabinendruckregelungssystem für ein Flugzeug sowie ein Kabinendruckregelungsverfahren für ein Flugzeug.

HINTERGRUND DER ERFINDUNG

Moderne größere Verkehrsflugzeuge erreichen im Reiseflug sehr große Flughöhen und erfordern einen druckbeaufschlagten Flugzeugrumpf, in dem das Überleben und das Wohlbefinden von Passagieren gesichert werden kann. Zum Verringern der mechanischen Belastung des Flugzeugrumpfs ist der Kabinendruck in Reiseflughöhe deutlich niedriger als am Boden und entspricht dabei einem atmosphärischen Luftdruck von Höhenlagen zwischen 2.000 m und 3.000 m. Die einem jeweiligen Kabinendruck entsprechende Höhe über dem Meeresspiegel wird häufig auch "Kabinenhöhe" genannt.

Der Kabinendruck wird in sämtlichen Operationsphasen über ein Kabinendruckregelsystem auf einen jeweils vorbestimmten Wert gebracht, der unter der Berücksichtigung der Belastung des Flugzeugrumpfes durch den Differenzdruck zwischen der Kabine und der Umgebung und der Sicherheit und des Wohlbefindens der Passagiere, das besonders eine ausreichende Sauerstoffversorgung betrifft, bestimmt wird. Hierzu gehört auch, dass der Kabinendruck während des Steigfluges gegenüber dem Kabinendruck am Boden abgesenkt und während des Sinkfluges auf das Druckniveau am Boden wieder angehoben wird. Im Stand der Technik ist die Annahme verbreitet, dass hierfür eine konstante Kabinendruckrate dem Optimum hinsichtlich eines Passagierkomforts entsprechen könnte. Somit basiert in gängigen Flugzeugen die durchgeführte Druckratenregelung eines Kabinendruckregelsystems im Steig- und Sinkflug auf einer Konstantdruckrate.

Es ist allerdings regelmäßig während eines Steig- und Sinkflugs in gängigen Verkehrsflugzeugen zu beobachten, dass die von Passagieren wahrgenommene Belastung des Trommelfells bzw. der Ohren an sich nicht überwiegend konstant ist, sondern dass die Kabinendruckregelung teilweise auch zu anschwellendem Schmerzgefühl bei Passagieren führen kann.

US 5,186,681 beschreibt eine Kabinendruckregelungseinheit, welche die Druckänderungsrate in der Kabine zeitlich konstant hält.

GB 1 247 624 A beschreibt eine Regelungsvorrichtung für einen Flugzeugkabinendruck, welche die Druckänderungsrate möglichst minimieren soll.

US 2007/0102576 A1 beschreibt ein Druckregelsystem für Flugzeuge, welches einen vorbestimmten Kabinendruckänderungswert mit einem gemessenen Kabinendruckänderungswert vergleicht.

US 2004/0102150 A1 beschreibt ein Regelsystem für einen Kabinendruck, bei dem in den meisten Fällen die Druckänderungsrate in der Kabine konstant gehalten wird.

ZUSAMMENFASSUNG DER ERFINDUNG

Es könnte demnach als Aufgabe anzusehen sein, ein Kabinendruckregelsystem vorzuschlagen, bei dem die Belastung eines menschlichen Ohrs während des Sinkflugs oder des Steigflugs möglich konstant ist und damit das Unbehagen der Passagiere minimiert werden kann.

Es könnte als eine weitere Aufgabe der Erfindung angesehen werden, ein derartiges Kabinendruckregelsystem vorzuschlagen, das mit der bereits vorhandenen Hardware in einem modernen Verkehrsflugzeug ohne kostenintensive Änderungsmaßnahmen durchgeführt werden kann.

Die Aufgabe wird durch ein Regelsystem zum Regeln des Kabinendrucks eines Flugzeugs mit den Merkmalen des unabhängigen Anspruchs 1 gelöst. Vorteilhafte Weiterbildungen sind den Unteransprüchen zu entnehmen.

Ein erfindungsgemäßes Regelsystem zum Regeln des Kabinendrucks eines Flugzeugs könnte eine Kabinendruckregeleinheit aufweisen, die dazu eingerichtet ist, durch Steuern einer Luftabfuhr- oder Lufteinfuhreinrichtung des Flugzeugs den momentanen Luftdruck $P_C$ innerhalb des mit Frischluft versorgten und druckbeaufschlagten Rumpfs des Flugzeugs auf einen der Kabinendruckregeleinheit vorgegebenen Druckwert einzustellen. Diese ist dazu eingerichtet, bei vorzunehmenden Druckänderungen den Quotienten aus der zeitlichen Änderung des Absolutdrucks $P_C$ in der Flugzeugkabine und dem Absolutdruck $P_C$ konstant zu halten.

Der Ausdruck "Luftabfuhr- oder Lufteinfuhreinrichtung" bezieht sich auf jegliche Art von Geräten oder Vorrichtungen, die dazu verwendet werden können, den Druck innerhalb eines belüfteten Raums, in den regelmäßig frische Luft eingeführt und aus dem verbrauchte Luft abgeführt wird, auf einem bestimmten Niveau zu halten. Beim Beispiel der Flugzeugkabine kann die Regelung sowohl durch Regelung der Luftzufuhr als auch der Luftabfuhr erfolgen, wobei die Luftabfuhr und Luftzufuhr auch gleichzeitig zum Regeln des Luftdrucks verwendet werden können. Als besonders geeignete Einrichtungen sind Abfuhrventile (sog. "Outflow Valves") anzusehen, ebenso können auch die Stauluftzufuhr und die über Klimaaggregate aufbereitete Zapfluft geregelt werden, um den Druck innerhalb der Kabine zu beeinflussen. Die Erfindung ist nicht auf die Verwendung einer spezifischen Lufteinfuhr- oder Luftabfuhreinrichtung beschränkt.

Die technischen Vorteile dieser Merkmale werden wie folgt erläutert. Das für das unbehagliche Gefühl eines Passagiers während einer Druckabsenkung oder während eines Druckaufbaus verantwortliche zentrale Element ist das menschliche Ohr. Das Mittelohr ist das druckempfindlichste Organ des menschlichen Körpers. Dieses ist derart aufgebaut, dass ein teilweise geschlossener Hohlraum in Form des Mittelohrs von einer Seite durch das membranartige Trommelfell begrenzt wird und von einer anderen Seite durch eine schlauchartige Verbindung in Form der Eustachischen Röhre mit dem Nasenrachen verbunden wird. Bei Druckschwankungen wird das im Mittelohr befindliche Gas expandiert oder komprimiert, so dass sich das Trommelfell aufzuwölben oder einzudrücken beginnt, was an der Schnecke des Ohrs durch Auslenkung des Trommelfells über das Ohrknöchelchen als unangenehm und mitunter schmerzhaft empfunden wird. Der aufgrund der anatomischen Gegebenheiten recht langsam einsetzende Druckausgleich des Mittelohrs durch die Eustachische Röhre kann durch Gähnen, Schlucken und dergleichen beschleunigt werden. Generell verhält sich die relative Volumenexpansion eines in einem Volumen eingeschlossenen Gases gemäß Boyle's Gesetz umgekehrt proportional zum Verhältnis aus einem Initialdruck und einem Enddruck. Aufgrund der im Mittelohr vorliegenden Sättigung mit Wasserdampf ist im Mittelohr der Partialdruck von Wasserdampf in diese Betrachtung mit einzubeziehen. Hieraus folgt, dass die relative Gasexpansion bei jeweils gleicher Druckdifferenz bei hohem absoluten Druckniveau geringer als bei niedrigem Druckniveau ist.

Das vom Mittelohr eingeschlossene Volumen wird daher bei einer herkömmlichen Kabinendruckregelung mit einer linearen Druckänderung im Sinkflug anfangs zunächst verhältnismäßig stark komprimiert, wobei die Kompressionsrate mit zunehmendem absolutem Kabinendruck abnimmt. Gleichermaßen steigert sich die Expansionsrate des im Mittelohr eingeschlossenen Volumens bei zunehmender Höhe im Steigflug. Durch die Vorgabe der Verwaltungseinheit, dass der Quotient aus der zeitlichen Druckänderung und dem Kabinendruck konstant bleiben soll, verbleibt auch die Expansionsrate des vom Mittelohr eingeschlossenen Gasvolumens gleich, so dass während des gesamten Steigflugs bzw. Sinkflugs ein gleichbleibendes Unbehaglichkeitsgefühl bei dem betreffenden Passagier entsteht und keine lokalen Maxima der Beschwerden auftreten. Die vorliegende Erfindung ist demnach in der Lage, eine lange bestehende Aufgabe zur adäquaten Kabinendruckregelung zur effektiven Berücksichtigung des empfindlichen Mittelohrs zu beheben.

Durch die Integration dieser Vorschrift der zeitlichen Druckänderung zum momentanen absoluten Kabinendruck ist es relativ leicht möglich, bereits vorhandene Hardware in dem Flugzeug weiterzuverwenden, indem beispielsweise eine entsprechend softwaremäßige Ansteuerung einer Kabinendruckregelungseinheit angepasst wird. Hierdurch sind keine schwerwiegenden Eingriffe in die Systeme eines modernen Verkehrsflugzeugs notwendig, so dass Kosten gespart werden können.

Weiterhin könnte das erfindungsgemäße Kabinendruckregelsystem mindestens eine mit der Kabinendruckregeleinheit und mindestens einem Sensor zum Erfassen des Absolutdrucks $P_C$ in der Flugzeugkabine verbundene Verwaltungseinheit aufweisen, wobei die Verwaltungseinheit der Kabinendruckregeleinheit den einzustellenden Druckwert vorgibt. Diese Verwaltungseinheit könnte mit einem Flight Management System (FMS) in Verbindung stehen, das zur Vorbereitung einer effizienten Kabinendruckregelung verschiedene Flugdaten wie Flughöhe oder Fluggeschwindigkeit oder auch Daten zu geplanten Zeitabläufen übertragen kann.

Es ist für einen Fachmann selbstverständlich, dass die Kabinendruckregeleinheit und die Verwaltungseinheit nicht unbedingt als voneinander getrennte Funktionselemente realisiert sein müssen, sondern dass diese auch durch eine einzige Einheit realisiert werden könnten. Eine entsprechende elektronische Datenverarbeitungseinheit oder dergleichen würde sich hierfür anbieten.

Gemäß einer vorteilhaften Weiterbildung des erfindungsgemäßen Regelsystems wird bei Änderungen des Kabinendrucks dieser derart eingestellt, dass der Quotient der zeitlichen Abweichung $dP/dt$ des Luftdrucks und des absoluten Luftdrucks $P_C$ (auch als "Unbehaglichkeits-Index" bezeichnet) innerhalb der Kabine konstant bleibt und dessen Ableitung demnach möglichst Null beträgt. Dadurch wird anschwellende Unbehaglichkeit vermieden.

Die Aufgabe wird ferner gelöst durch ein Verfahren zum Regeln des Luftdrucks in einer Kabine sowie durch ein Flugzeug mit einer Kabinendruckregelungseinheit, einer Verwaltungseinheit, mindestens einer Luftzufuhreinrichtung und mindestens einer Luftabfuhreinrichtung sowie mindestens einem Sensor zum Erfassen des momentanen absoluten Luftdrucks in dem Rumpf des Flugzeugs.

KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbeziehungen. In den Figuren stehen weiterhin gleiche Bezugszeichen für gleiche oder ähnliche Objekte.

Fig. 1 zeigt eine schematische Ansicht des erfindungsgemäßen Systems.

Fig. 2a bis 2c zeigen exemplarisch ein Flugprofil, ein Kabinenhöhenprofil sowie eine Abweichung des erfindungsgemäßen Kabinenhöhenprofils von einem herkömmlichen Kabinenhöhenprofil.

Fig. 3a und 3b demonstrieren einen Diskomfort-Index sowie eine zeitliche Ableitung des Diskomfort-Indexes.

## DETAILLIERTE DARSTELLUNG EXEMPLARISCHER AUSFÜHRUNGSFORMEN

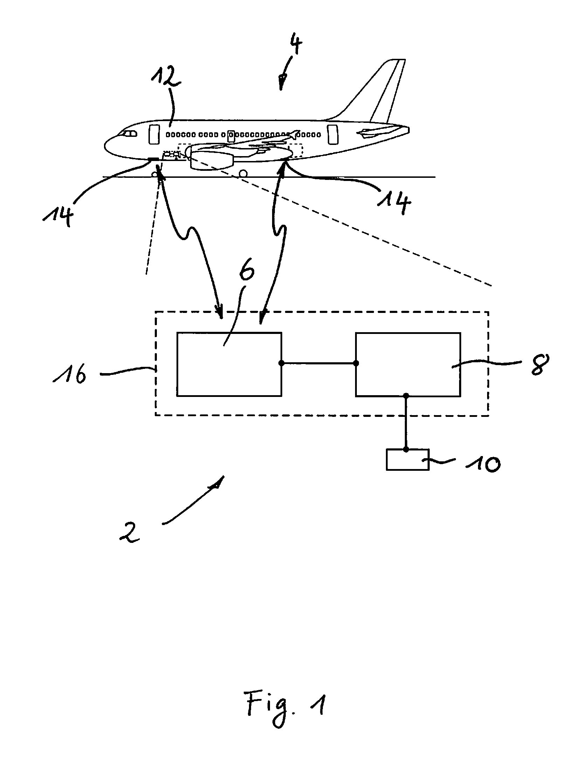

Fig. 1 zeigt exemplarisch ein erfindungsgemäßes Regelsystem 2 zum Regeln des Kabinendrucks eines Flugzeugs 4, das eine Kabinendruckregeleinheit 6 enthält, die mit einer Verwaltungseinheit 8 verbunden ist. Ein Sensor 10 liefert Signale an die Verwaltungseinheit 8, die den momentanen absoluten Kabinendruck $P_C$ innerhalb eines Rumpfs 12 des Flugzeugs 4 repräsentieren. Selbstverständlich können auch unabhängig von dem Kerngedanken der Erfindung an mehreren und/oder gleichen Stellen innerhalb des Flugzeugrumpfs 12 weitere Sensoren 10 angeordnet werden, wobei die ermittelten Werte für den absoluten Kabinendruck $P_C$ gemittelt oder aus Redundanzgründen miteinander verglichen werden können. Die Anzahl und Vervielfältigung der Komponenten soll nicht den Gegenstand der Erfindung beschränken. Das Flugzeug 4 enthält hier weiterhin beispielhaft zwei Luftabfuhreinrichtungen 14 zum kontrollierten Abführen von Luft aus der Kabine zum Regeln des Drucks in der Kabine, wobei hierfür verbreitet beispielsweise Ventile (sogenannte "outflow valves") zum Abführen von Luft Verwendung finden.

Gleichzeitig kann die Lufteinfuhr zum kontrollierten Einführen von Luft in die Kabine geregelt werden, um den Druck in der Kabine zu beeinflussen.

Weiterhin kann der Sensor 10 auch alternativ mit der Kabinendruckregeleinheit 6 verbunden sein, so dass die Verwaltungseinheit 8 lediglich bei Einleitung des Sinkflugs oder des Steigflugs eine Druckänderungsrate oder den Beginn einer Steig- oder Sinkflugphase vorgibt. Es ist auch denkbar, dass durch die Verwaltungseinheit 8 die derzeitige Flughöhe an die Kabinendruckregeleinheit 6 übermittelt wird, so dass dort selbsttätig die Einleitung des Sinkflugs oder des Steigflugs erkannt und der Kabinendruck $P_C$ entsprechend angepasst werden kann.

Gemäß dem dargestellten Ausführungsbeispiel wird durch die Verwaltungseinheit 8 stets der momentan erfasste absolute Kabinendruck $P_C$ innerhalb des Rumpfs 12 über den Sensor 10 erfasst, so dass beispielsweise bei Einleitung eines Steigflugs oder eines Sinkflugs nach den erfindungsgemäßen Kriterien eine Änderung des Kabinendrucks $P_C$ in der Kabine vollzogen werden kann. Die Verwaltungseinheit 8 könnte hierfür dazu eingerichtet, der Kabinendruckregelungseinheit 6 permanent einen solchen einzustellenden Luftdruck vorzugeben, dass der Quotient der zeitlichen Abweichung $dP_C/dt$ des Kabinendrucks und des absoluten Kabinendrucks $P_C$ innerhalb der Kabine 12 konstant bleibt:

$$\frac{\frac{dP_C}{dt}}{P_C} = const.$$

Alternativ können die Verwaltungseinheit 8 und die Kabinendruckregeleinheit 6 in Form einer einzelnen Regeleinheit 16 integriert sein. Weiter alternativ könnten die wesentlichen oder sämtliche vorgenannten Funktionen auch durch die Kabinendruckregeleinheit 6 selbständig vollzogen werden.

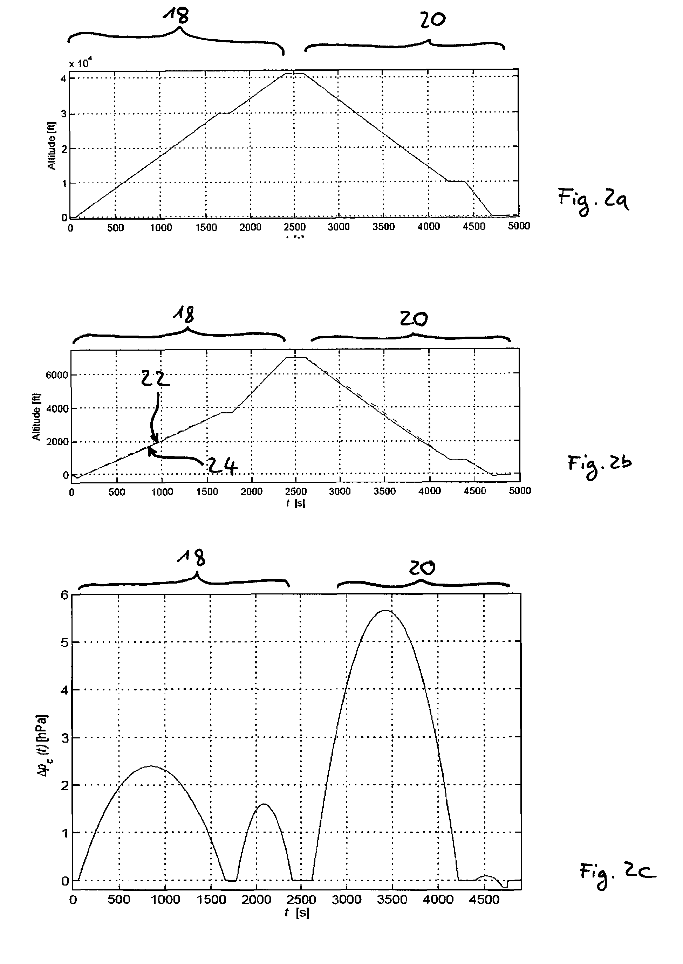

In Fig. 2a wird ein exemplarisches Flugprofil gezeigt, bei der die Flughöhe in ft ("Fuß") gegenüber der Zeit in s aufgetragen ist. In einem ersten Zeitabschnitt 18 steigt das Flugzeug bis zu einer Reiseflughöhe auf und sinkt in einem zweiten Zeitabschnitt 20 auf Bodenniveau. Zum Verringern der mechanischen Belastung des Flugzeugrumpfs 12 ist der absolute Kabinendruck $P_C$ innerhalb des Flugzeugrumpfs 12 im Reiseflug niedriger als am Boden, so dass die Druckdifferenz und damit die auf den Rumpf 12 einwirkende mechanische Kraft verringert wird. Wie eingangs geschildert, kann der jeweilige absolute Kabinendruck $P_C$ in den Rumpf mit einer zugehörigen "Kabinenhöhe" repräsentiert werden. Es hat sich herausgestellt, dass eine Kabinenhöhe von ca. 2.000 m - 3.000 m einen guten Kompromiss zwischen dem Wohlbefinden der Passagiere und der mechanischen Belastung des Flugzeugrumpfs 12 darstellt, wobei mit "Wohlbefinden" besonders eine ausreichende Sauerstoffversorgung und eine geringe Verursachung von Müdigkeit gemeint ist.

Wie in Fig. 2b gezeigt, wird die Kabinenhöhe in ft parallel zur Flughöhe angepasst. Die in Fig. 2b gezeigte gestrichelte Linie 22 entspricht dabei einem Kabinenhöhenprofil, wie es mit einem Regelsystem 2 gemäß der vorliegenden Erfindung realisiert wird. Die durchgezogene Linie 24 entspricht einem mit einem herkömmlichen Regelsystem erzeugten Profil. Aufgrund der global betrachtet recht ähnlichen Kabinendrücke bzw. der sehr ähnlichen Kabinenhöhen wird in Fig. 2c zusätzlich die Differenz zwischen den Verläufen von $P_C$ mit einem erfindungsgemäßen Regelsystem 2 und einem herkömmlichen Regelsystem gewonnen diagrammatisch dargestellt. Dort wird in dem ersten Zeitabschnitt 18, der dem Steigflug entspricht, eine maximale Differenz von exemplarisch ca. 2,5 mbar zwischen dem herkömmlichen Kabinenhöhenprofil 24 und dem durch das erfindungsgemäße Regelsystem 2 realisierte Kabinenhöhenprofil 22 erreicht. Diese Differenz gleicht die ungleichmäßige Belastung eines Ohrs während des Steigflugs aus und ist für das menschliche Ohr deutlich wahrnehmbar. In dem zweiten Zeitabschnitt 20, der dem Sinkflug entspricht, werden noch weitaus höhere Differenzen bis zu exemplarisch 5,5 mbar erreicht, was sich gemäß Boyle's Gesetz durch den hohen Initialdruck beim Einleiten des Sinkflugs ergibt.

Durch diese angepasste Druckratenregelung gemäß der vorliegenden Erfindung wird erreicht, dass das vom Mittelohr eingeschlossene Gas während des gesamten Steigflugs, bis auf exemplarisch dargestellte Plateaus im Höhenprofil, kontinuierlich expandiert. Analog gilt dies auch für den Sinkflug. Es werden keine lokalen Maxima einer Gasexpansion im Mittelohr erreicht, so dass das Unbehaglichkeitsgefühl während bestimmter Phasen des Steig- oder Sinkflugs nicht übermäßig steigt und keinen Schwankungen unterworfen ist.

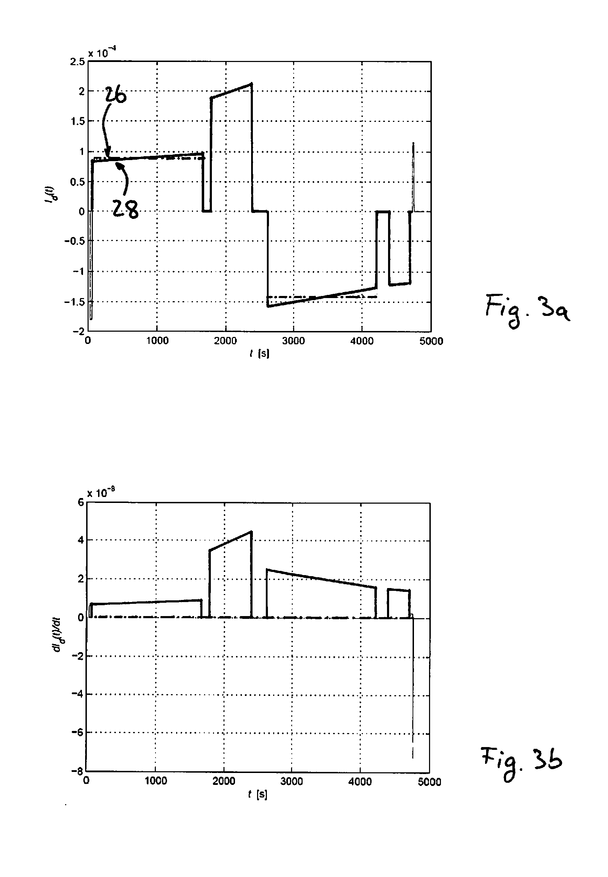

In Fig. 3a wird ein sogenannter Unbehaglichkeits-("Diskomfort")-Index $I_d(t)$ gezeigt, der sich durch die Gleichung

$$I_d(t) = \frac{P_C(t)}{P_C(t+dt)} - 1$$

definieren lässt, wobei $P_C(t)$ für den absoluten Kabinendruck zur Zeit t steht und dt ein Zeitinkrement ist. Die gestrichelte Linie 26 zeigt den Unbehaglichkeits-Index, der mit einem erfindungsgemäßen Regelsystem 2 zum Regeln des Kabinendrucks eines Flugzeugs erreicht wird, während die durchgezogene Linie 28 auch hier den mit einem herkömmlichen Regelsystem erreichten Unbehaglichkeits-Index darstellt. Es fällt bereits augenscheinlich auf, dass sich in keinem der Bereiche des Steigflugs und des Sinkflugs zwischen den beispielhaft vorhandenen Flughöhenprofilplateaus steigende oder fallende Werte für den Unbehaglichkeits-Index ergeben, sondern dass bei ansteigenden oder fallenden Kabinendrücken $P_C$ in dem Rumpf 12 des Flugzeugs 4 ausgewogene, gleichmäßige Werte ergeben. Anschaulich wird dies weiter durch Fig. 3b dargestellt, in der die zeitliche Ableitung des Unbehaglichkeits-Indexes präsentiert wird. Dieser ist bis auf Unstetigkeiten direkt beim Start und bei der Landung Null, d.h. es werden durch das erfindungsgemäße Regelsystem 2 keine anschwellenden Beschwerden bei den Passagieren verursacht.

Ergänzend ist darauf hinzuweisen, dass "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

BEZUGSZEICHEN

| | |
|---|---|
| 2 | erfindungsgemäßes Regelsystem |
| 4 | Flugzeug |
| 6 | Kabinendruckregeleinheit |
| 8 | Verwaltungseinheit |
| 10 | Sensor für $P_C$ |
| 12 | Flugzeugrumpf |
| 14 | Luftabgabeeinrichtung |
| 16 | Regeleinheit |
| 18 | erster Zeitabschnitt (Steigflug) |
| 20 | zweiter Zeitabschnitt (Sinkflug) |
| 22 | Kabinenhöhenprofil erfindungsgemäß |
| 24 | Kabinenhöhenprofil herkömmlich |
| 26 | Unbehaglichkeits-Index erfindungsgemäß |
| 28 | Unbehaglichkeits-Index herkömmlich |

**Patentansprüche**

1. Regelsystem (2) zum Regeln des Kabinendrucks $P_C$ eines Flugzeugs (4), aufweisend mindestens eine Kabinendruckregeleinheit (6), welche dazu eingerichtet ist, durch Steuern mindestens einer Luftabfuhreinrichtung (14) oder Lufteinfuhreinrichtung des Flugzeugs (4) den Kabinendruck $P_C$ innerhalb des mit Frischluft versorgten und druckbeaufschlagten Flugzeugrumpfs (12) auf einen der Kabinendruckregeleinheit (6) vorgegebenen Druckwert oder eine vorgegebene Kabinenhöhe einzustellen, **dadurch gekennzeichnet, dass** die Kabinendruckregeleinheit (6) eingerichtet ist, bei vorzunehmenden Änderungen des Druckwerts oder der Kabinenhöhe den Quotient aus der zeitlichen Änderung des Kabinendrucks $dP_C/dt$ in der Flugzeugkabine und dem Kabinendruck $P_c$ konstant zu halten.

2. Regelsystem (2) nach Anspruch 1, ferner aufweisend mindestens eine mit der Kabinendruckregeleinheit (6) und mindestens einem Sensor (10) zum Erfassen des Kabinendrucks $P_c$ in der Flugzeugkabine verbundene Verwaltungseinheit (8), die dazu eingerichtet ist, der Kabinendruckregeleinheit (6) den einzustellenden Druckwert oder die Kabinenhöhe vorzugeben.

3. Regelsystem nach Anspruch 1 oder 2, wobei die Verwaltungseinheit (8) dazu eingerichtet ist, den Druckwert oder die Kabinenhöhe in Form eines Druckprofils oder Kabinenhöhenprofils vorzugeben.

4. Verfahren zum Regeln des Kabinendrucks $P_C$ eines Flugzeugs (4), aufweisend die Schritte

    - Erfassen des Kabinendrucks $P_C$ ;
    - Steuern mindestens einer Luftabfuhr- oder Lufteinfuhreinrichtung (14) des Flugzeugs (4) zum Einstellen des Kabinendrucks $P_c$ innerhalb eines mit Frischluft versorgten und druckbeaufschlagten Flugzeugrumpfs (12) auf einen vorgegebenen Druckwert; **gekennzeichnet durch** den folgenden Schritt:

- Auf Anforderung zum Ändern von $P_C$ Konstanthalten des Quotienten aus der zeitlichen Änderung des Absolutdrucks d$P_C$/dt in der Flugzeugkabine und dem Absolutdruck $P_C$.

**5.** Flugzeug (4), aufweisend

- mindestens eine Luftabfuhr- oder Lufteinfuhreinrichtung (14),
- mindestens einen Sensor (10) zum Erfassen eines absoluten Kabinendrucks $P_C$ und
- mindestens ein Regelsystem (2) nach Anspruch 1.

**Claims**

**1.** A regulating system for regulating the cabin pressure $P_C$ of an aircraft (4), the system comprising at least one cabin pressure regulator unit (6), which is so configured that, by controlling at least one of an air outflow device and an air inflow device (14) of the aircraft, it can adjust the cabin pressure $P_c$ within a fuselage (12) of the aircraft, which is supplied with fresh air and subjected to pressure, to a predetermined pressure level indicated by the cabin pressure regulator unit (6), or it can set a predetermined cabin height, **characterized in that** the cabin pressure regulator unit (6) is configured such that, when changes of the pressure level or the cabin height have to be made, the quotient of the time-related change of the cabin pressure $dP_c$/$dt$ in the fuselage of the aircraft and the cabin pressure $P_c$ can be kept constant.

**2.** The regulating system according to claim 1, further comprising at least one management unit (8) connected to the cabin pressure regulator unit and to at least one sensor (10) to determine the cabin pressure $P_c$ in the aircraft cabin, wherein the management unit is set up in such a way that it can indicate to the cabin pressure regulator unit (6) the pressure level or the cabin height to be selected.

**3.** The regulating system according to claim 1 or 2, wherein the management unit (8) is so configured that it can indicate the pressure level or the cabin height in the form of a pressure profile or in form of a cabin height profile.

**4.** A method for regulating a cabin pressure $P_C$ of an aircraft (4), comprising the steps of

- detecting the cabin pressure $P_C$;
- controlling at least one of an air outflow or an air inflow device (14) of the aircraft (4) to adjust the cabin pressure $P_C$ within an aircraft fuselage (12) that is supplied with fresh air and subject to loading at a predetermined pressure level, **characterized by** the following step:
- if changes to $P_C$ are demanded, maintaining the quotient of the time-related change of the absolute cabin pressure $P_C$/dt in the aircraft cabin and the absolute cabin pressure $P_C$.

**5.** An aircraft (4), comprising:

- at least one of an air outflow or an air inflow device (14),
- at least one sensor (10) to detect an absolute cabin pressure $P_C$ and
- at least one regulating system (2) according to claim 1.

**Revendications**

**1.** Système de régulation (2) pour réguler la pression de la cabine $P_C$ d'un avion (4), présentant :

au moins une unité de régulation de pression de la cabine (6), qui est adaptée pour régler, par la commande d'au moins un moyen d'évacuation d'air (14) ou un moyen d'alimentation en air de l'avion (4), la pression de la cabine $P_C$ à l'intérieur du fuselage (12) alimenté en air frais et pressurisé à une valeur de pression prédéterminée pour l'unité de régulation de pression de la cabine (6) ou à une altitude prédéterminée de la cabine, **caractérisé par le fait que** l'unité de régulation de pression de la cabine (6) est adaptée pour maintenir à un niveau constant le quotient entre la variation dans le temps de la pression de la cabine dPc/dt dans la cabine de l'avion et la pression de la cabine $P_C$ lors de changements à effectuer concernant la valeur de pression ou l'altitude de la cabine.

**2.** Système de régulation (2) selon la revendication 1, présentant en outre au moins une unité de gestion (8) reliée à l'unité de régulation de pression de la cabine (6) et au moins à un capteur (10) pour détecter la pression de cabine $P_C$ dans la cabine de l'avion, l'unité de gestion étant adaptée pour prédéterminer pour l'unité de régulation de pression de la cabine (6) la valeur de pression à régler ou l'altitude de la cabine.

**3.** Système de régulation selon la revendication 1 ou 2, l'unité de gestion (8) étant adaptée pour prédéterminer la valeur de pression ou l'altitude de la cabine sous la forme d'un profil de pression ou d'un profil d'altitude de la cabine.

**4.** Procédé pour réguler la pression de la cabine $P_C$ d'un avion (4), présentant les étapes de :

- détection de la pression de cabine $P_c$ ;
- commande d'au moins un moyen d'évacuation d'air ou un moyen d'alimentation en air (14) de l'avion (4) pour régler sur une valeur de pression prédéterminée la pression de cabine $P_c$ à l'intérieur d'un fuselage d'avion (12) alimenté en air frais et pressurisé (12) ; **caractérisé par** l'étape suivante :
- maintien à un niveau constant du quotient entre la variation dans le temps de la pression absolue dPc/dt dans la cabine de l'avion et la pression absolue $P_c$ sur demande de modification de $P_c$.

5.   Avion (4) présentant :

- au moins un moyen d'évacuation d'air ou un moyen d'alimentation en air (14),
- au moins un capteur (10) pour détecter une pression de cabine $P_c$ absolue et
- au moins un système de régulation (2) selon la revendication 1.

Fig. 1

Fig. 2a

Fig. 2b

Fig. 2c

Fig. 3a

Fig. 3b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 61246257 B
- DE 102009043323
- US 5186681 A
- GB 1247624 A
- US 20070102576 A1
- US 20040102150 A1